# EUROPÄISCHE PATENTANMELDUNG

(11) **EP 2 289 770 A1**
(43) Veröffentlichungstag der Anmeldung: **02.03.2011**
(21) Anmeldenummer: 09168967.9
(22) Anmeldetag: 28.08.2009
(51) Int. Cl.: B62D 25/02, B62D 25/04, B62D 25/20, B62D 29/00, C23C 30/00, B21D 22/20

(54) **Korrosiongeschützte geschweisste Blechplatine für ein Kraftfahrzeug und deren Herstellungsverfahren**

(71) Anmelder: ThyssenKrupp Steel Europe AG, 47166 Duisburg (DE)
(72) Erfinder: Sikora, Sascha, 44534, Lünen (DE); Breidenbach, Andreas, 50321, Brühl (DE); Grüneklee, Axel, 47249, Duisburg (DE); Schmitz, Kai, 42929, Wermelskirchen (DE); Lenze, Franz-Josef, 57368, Lennestadt (DE); Kuhn, Patrick, 44139 Dortmund (DE); Meurer, Manfred, 47495 Rheinberg (DE)
(74) Vertreter: Cohausz & Florack

(57) **Zusammenfassung**

Die Erfindung betrifft eine Blechplatine, insbesondere ein Tailored Blank, für ein Kraftfahrzeug mit einem ersten Blechplatinenteil (4´) und mit mindestens einem zweiten Blechplatinenteil (6´). Die Aufgabe, eine gattungsgemäßen Blechplatine für ein Kraftfahrzeug zur Verfügung zu stellen, welche in einfacher Weise einen verbesserten Korrosionsschutz insbesondere im Nassbereich ermöglicht, wird dadurch gelöst, dass das erste Blechplatinenteil (4´) zumindest teilweise eine zinkhaltige Beschichtung aufweist.

## Beschreibung

Die Erfindung betrifft eine Blechplatine, insbesondere ein Tailored Blank, für ein Kraftfahrzeug mit einem ersten Blechplatinenteil und mit mindestens einem zweiten Blechplatinenteil. Darüber hinaus betrifft die Erfindung ein Struktur- oder Karosserieteil eines Kraftfahrzeugs hergestellt aus dieser Blechplatine und ein Verfahren zur Herstellung eines Struktur- oder Karosserieteils aus einer Blechplatine.

Bei der Herstellung von Fahrzeugkarosserien werden in der heutigen Zeit in der Regel Blechplatinen, insbesondere Tailored Blanks, verwendet. Tailored Blanks zeichnen sich dadurch aus, dass sie aus mindestens zwei unterschiedlichen Blechplatinen aus unterschiedlichen Materialgüten und/oder Materialdicken zur Erzielung spezifischer an die Belastung angepasster Eigenschaften bei minimalem Gewicht bestehen, wobei die Blechplatinen miteinander verschweißt sind.

Um bestimmte Struktur- oder Karosserieteile herzustellen, wie beispielsweise eine Karosserieseitenwand eines Fahrzeugs, wird die Blechplatine im Allgemeinen zumindest teilweise einem Warmumformprozess unterzogen.

Aus der DE 10 2004 053 917 B3 ist eine einstückige Fahrzeugseitenwand bekannt, welche durch Warmumformung hergestellt wird. Diese Fahrzeugseitenwand weist einen im unteren Bereich verlaufenden Schweller, einen Dachrahmenbereich und sich zwischen dem Schweller und dem Dachrahmenbereich befindliche Fahrzeugsäulen auf. Die Seitenwand weist zum Schutz vor einer Entkohlung während der Warmumformung und zur Erhöhung der Korrosionsbeständigkeit eine feueraluminierte (fal) Beschichtung auf, die ca. 90 % Aluminium und 10 % Silizium enthält.

Für bestimmte Bereiche der Karosserie, wie beispielsweise dem Nassbereich der Karosserie, also einem Bereich, der vermehrt Feuchtigkeit ausgesetzt ist, stellt die Aluminium-Silizium-Beschichtung keinen ausreichenden Korrosionsschutz dar. Um einen verbesserten Schutz in diesen Risikobereichen der Karosserie zu erhalten, sind aus dem Stand der Technik sekundäre Korrosionsschutzmaßnahmen, wie zum Beispiel wachsen, bekannt, die jedoch einen entsprechend erhöhten Aufwand mit sich bringen. Zudem führt auch die zusätzliche Behandlung zu keinem ausreichenden Korrosionsschutz in den Risikobereichen.

Von diesem Stand der Technik ausgehend liegt der vorliegenden Erfindung die Aufgabe zugrunde, eine gattungsgemäße Blechplatine zur Verfügung zu stellen, welche in einfacher Weise einen verbesserten Korrosionsschutz ermöglicht.

Die oben aufgezeigte Aufgabe wird gemäß einer ersten Lehre der vorliegenden Erfindung bei einer gattungsgemäßen Blechplatine dadurch gelöst, dass das erste Blechplatinenteil zumindest teilweise eine zinkhaltige Beschichtung aufweist.

Im Gegensatz zu bekannten Blechplatinen kann auch in einem korrosionsanfälligen Bereich einer Blechplatine, wie beispielsweise in einem Nassbereich einer Fahrzeugkarosserie, ein ausreichender Korrosionsschutz aufgrund der erfindungsgemäßen zinkhaltigen Beschichtung gewährleistet werden. Die zinkhaltige Beschichtung stellt einen ausreichenden kathodischen Korrosionsschutzüberzug dar, der sich besonders für eine Warmumformung der Blechplatine eignet. Es kann auch das gesamte erste Blechplatinenteil mit einer zinkhaltigen Beschichtung versehen sein. Es versteht sich hierbei, dass die Blechplatine drei oder mehr Blechplatinenteile aufweisen kann, wobei zumindest ein Blechplatinenteil zumindest teilweise eine zinkhaltige Beschichtung aufweist. Durch den Aufbau der erfindungsgemäßen Blechplatine kann in einfacher Weise ein optimierter Korrosionsschutz für verschiedene Bereiche der Blechplatine und damit der Fahrzeugkarosserie erreicht werden.

Gemäß einer ersten erfindungsgemäßen Ausgestaltung der Blechplatine kann die zinkhaltige Beschichtung einen Zinkanteil von mindestens 30 Gew.-%, insbesondere vor einer Warmumformung, umfassen. Tests haben gezeigt, dass ein optimierter Korrosionsschutz bei einem Zinkanteil von zumindest 30 Gew.-% erzielt werden kann. Insbesondere bei einer späteren Warmumformung, bei welcher Zinkanteile in den Stahlwerkstoff diffundieren, kann durch den erfindungsgemäßen Zinkanteil ein ausreichender Korrosionsschutz in einem Risikobereich sichergestellt werden.

Darüber hinaus kann die zinkhaltige Beschichtung vorzugsweise eine organische Beschichtung oder anorganische Beschichtung sein.

Um den Herstellungsaufwand zu reduzieren bzw. eine Verzundung eines Blechplatinenteils während einer Warmumformung zu vermeiden, kann das zweite Blechplatinenteil unbeschichtet sein oder eine Aluminium-Silizium-Beschichtung aufweisen. Es wird nur ein Teil der Blechplatine mit einer zinkhaltigen Beschichtung versehen und eine anwendungsspezifische Gestaltung der Blechplatine erreicht werden. Daneben können bei einem unbeschichteten zweiten Blechplatinenteil auch die Herstellungskosten reduziert werden.

In einer weiteren vorteilhaften Ausgestaltung kann mindestens eines der Blechplatinenteile aus einer Stahlegierung mit folgenden Legierungsbestandteile in Gew.-% bestehen:

| | | | | |
|---|---|---|---|---|
| 0,01 % | ≤ | C | ≤ | 0,5 %, |
| | | Si | ≤ | 0,8 %, |
| 0,2 % | ≤ | Mn | ≤ | 2 %, |
| | | Cr | ≤ | 0,8 %, |
| | | Mo | ≤ | 0,6 %, |
| | | Ti | ≤ | 0,2 %, |
| | | B | ≤ | 0, 05 %, |
| 0,015 % | ≤ | Al | ≤ | 2,0 %, |
| | | S | ≤ | 0,03 %, |
| | | P | ≤ | 0,04 %, |
| | | V | ≤ | 0,01 %, |
| | | Nb | ≤ | 0,2 %, |
| | | Cu | ≤ | 0,1 %, |
| | | Ni | ≤ | 0,1 %, |
| | | N | ≤ | 0,05 %, |

Rest Eisen sowie unvermeidbare Verunreinigungen. Mit dem Kohlestoffgehalt kann die Härte und Festigkeit eingestellt werden, wobei sich gezeigt hat, dass bei einem Kohlenstoffgehalt von über 0,5 Gew.-% die Schweißbarkeit verringert wird. Erst ab einem unteren Grenzwert des Kohlenstoffgehalts von 0,01 Gew.-% erhöht sich die Härte des Werkstoffs nennenswert, um gute Festigkeiten der Blechplatine bereitzustellen. Silizium kann ebenfalls festigkeitsfördernd eingesetzt werden, wobei Silizium insbesondere als Nickel Substituent dienen kann. Durch eine Zugabe von Silizium von über 0,8 Gew.-% lässt sich der Effekt jedoch nicht weiter steigern. Um die Festigkeit und Einhärtetiefe des Stahls zu verbessern, kann ferner Mangan hinzugefügt werden. Hierbei hat sich gezeigt, dass dieser Effekt erst bei 0,2 Gew.-% nennenswert in Erscheinung tritt, während ab 2,0 Gew.-% keine weiteren Steigerungen der Festigkeit und der Einhärtetiefe erkennbar sind. Positiv auf die Festigkeit des Stahls wirkt sich die Zugabe von Chrom aus, wobei ein Grenzwert von 0,8 Gew.-% nicht überschritten werden sollte, um einer unerwünschten Karbidbildung vorzubeugen. In Verbindung mit Chrom kann Molybdän die Zugfestigkeit verbessern, wobei ebenfalls zur Vermeidung von Karbidbildung ein Grenzwert von 0,6 Gew.-% nicht überschritten werden sollte. Titan wirkt kornfeinend, sollte jedoch zur Vorbeugung von Karbidbildung nur bis zu einem Anteil von 0,2 Gew.-% zugegeben werden. Bor kann eine bessere Durchhärtung sowie höhere Streckgrenze und Festigkeit bewirken. Zur Vermeidung einer verringerten Schweißfähigkeit sollte aber ein Gehalt von 0,05 Gew.-% nicht überschritten werden. Ein Aluminiumanteil in der Legierung kann Stickstoff zu Nitriden abbinden, also Denitrierungsmittel wirken, den Stahl beruhigen und zudem das Härtungsgefüge begünstigen. Jedoch setzt eine nennenswerte Wirkung erst ab 0,015 Gew.-% ein. Zur Begrenzung der Sprödigkeit des Stahls sollte ferner nicht mehr wie 0,03 Gew.-% Schwefel und maximal 0,05 Gew.-% Stickstoff zugegeben werden. Da sich Phosphor ab einer Obergrenze von 0,04 Gew.-% negativ auf die mechanischen Eigenschaften des Stahlwerkstoffes auswirkt, wird dieser Grenzwert nicht überschritten. Vanadium kann die Zugfestigkeit und die Streckgrenze erhöhen, wobei ein Grenzwert von 0,01 Gew.-% zur Vermeidung von Karbidbildung nicht überschritten werden sollte. Niob besitzt einen positiven, stabilisierenden Effekt, der jedoch ab einem oberen Grenzwert von 0,2 Gew.-% nicht weiter gesteigert werden kann. Kupfer kann zwar die Festigkeit und die Streckgrenze erhöhen. Allerdings wird bei höheren Kupfergehalten die Dehnung verringert, so dass ein Grenzwert von 0,1 Gew.-% nicht überschritten werden sollte. Schließlich bewirkt Nickel eine gute Durchhärtung der Stahllegierung. Aufgrund der mit der Zugabe von Nickel verbundenen Kosten wird bevorzugt ein Grenzwert maximal von 0,1 Gew.-% eingehalten.

Bevorzugt kann die Stahllegierung aus folgenden Legierungsbestandteile in Gew.-% bestehen:

| | | | | |
|---|---|---|---|---|
| 0,01 % | ≤ | C | ≤ | 0,4 %, |
| 0,005 % | ≤ | Si | ≤ | 0,7 %, |
| 0,2 % | ≤ | Mn | ≤ | 2 %, |
| 0,015 % | ≤ | Cr | ≤ | 0,8 %, |
| 0,002 % | ≤ | Mo | ≤ | 0,018 %, |
| 0,0018 % | ≤ | Ti | ≤ | 0,15 %, |
| | | B | ≤ | 0,05 %, |
| 0,015 % | ≤ | Al | ≤ | 0,045 %, |
| 0,001 % | ≤ | S | ≤ | 0,005 %, |
| 0,005 % | ≤ | P | ≤ | 0,03 %, |
| 0,002 % | ≤ | V | ≤ | 0,01 %, |
| | | Nb | ≤ | 0,1 %, |

| | | | | |
|---|---|---|---|---|
| 0,01 % | ≤ | Cu | ≤ | 0,07 %, |
| 0,01 % | ≤ | Ni | ≤ | 0,1 %, |
| | | N | ≤ | 0,05 %, |

Rest Eisen sowie unvermeidbare Verunreinigungen. Der Kohlenstoffgehalt ist in diesem Ausführungsbeispiel auf 0,4 Gew.-% begrenzt, um die Sprödigkeit zu begrenzen und daher die Schweißeignung zu verbessern. Der positive Härtungseffekt und der Desoxidationseffekt von Silizium setzen merklich erst ab 0,005 Gew.-% und nehmen schon ab 0,7 Gew.-% nicht mehr wesentlich zu. Chrom steigert die Festigkeit insbesondere ab einem unteren Schwellwert von 0,015 Gew.-%. Darüber hinaus steigert Molybdän, insbesondere in Kombination mit Chrom, ab 0,002 Gew.-% signifikant die Festigkeit, während schon bei einem Gehalt größer als 0,018 Gew.-% eine ungewünschte Karbidbildung auftreten kann. Titan verhindert signifikant eine interkristalline Korrosion ohne eine signifikante Karbidbildung zu erzeugen, wenn der Titangehalt zwischen 0,0018 Gew.-% und 0,15 Gew.-% liegt. Bei Werten über 0,15 Gew.-% verringert sich zudem bereits die Streckfähigkeit. Darüber hinaus ist erkannt worden, dass nur bei Zugabe von Aluminium bis max. 0,045 % eine Feinkornausbildung begünstigt wird. Bei höheren Zugabewerten für Aluminium werden die Kristallkörner bereits wieder gröber. Schwefel verbessert die Bearbeitbarkeit des Werkstoffs signifikant erst ab 0,001 Gew.-%. Jedoch sollte bevorzugt eine Obergrenze von 0,005 Gew.-% nicht überschritten werden, da ab dieser Grenze die Sprödigkeit des Werkstoffes merklich zunimmt. Der Phosphorgehalt des Werkstoffes sollte vorzugsweise zwischen 0,005 Gew.-% und 0,03 Gew.-% liegen, um eine ungewünschte Seigerung zu vermeiden. Vanadium erhöht die Zugfestigkeit und Streckgrenze merklich erst ab 0,002 Gew.-%, wobei ab einer Obergrenze von 0,01 Gew.-% schon eine ungewünschte Karbidbildung auftritt. Da eine Verringerung der Dehnfähigkeit des Stahlwerkstoffes bereits ab einem Kupfergehalt von 0,07 Gew.-% und eine merkliche Erhöhung der Festigkeit und der Streckgrenze erst ab 0,01 Gew.-% auftritt, kann der Kupfergehalt des Werkstoffes insbesondere zwischen diesen Grenzen liegen. Schließlich wirkt sich Nickel erst ab einem Gehalt von 0,01 Gew.-% merklich positiv auf die Durchhärtung der Stahllegierung aus.

Verschiedene Blechplatinenteile können aus unterschiedlichen Stahllegierungen hergestellt sein, wobei die Stahllegierungen zur Optimierung des Struktur- und Crashverhalten unterschiedlich Härtegrade aufweisen können. Beispielweise können höherfestige Stähle, wie ein pressgehärteter Mangan-Bor-Stahl oder Restaustenit-Stahl, oder weichere Stähle, wie ein mikrolegierter Stahl, verwendet werden.

Die oben aufgezeigte Aufgabe wird gemäß einer weiteren Lehre der vorliegenden Erfindung bei einem Struktur- oder Karosserieteil eines Kraftfahrzeugs hergestellt aus einer zuvor beschriebenen Blechplatine gelöst. Gerade bei einem Struktur- oder Karosserieteil, welches einen korrosionsanfälligen Bereich aufweist, ist es vorteilhaft, in diesem Bereich eine zinkhaltige Beschichtung vorzusehen, um einen optimalen Korrosionsschutz zu erhalten. Insbesondere bei der Herstellung des Struktur- oder Karosserieteils aus der Blechplatine mittels Warmumformung stellt die zinkhaltige Beschichtung einen ausreichenden Korrosionsschutz sicher. Aus Kostengründen können andere weniger gefährdete Bereiche unbeschichtet sein oder mit einer kostengünstigeren Beschichtung versehen sein.

Gemäß eines bevorzugten Ausführungsbeispiels des Struktur-oder Karosserieteils kann das zumindest teilweise eine zinkhaltige Beschichtung aufweisende Blechplatinenteil im Nassbereich des Kraftfahrzeugs angeordnet sein. Hierdurch wird ein verbesserter Korrosionsschutz in dem Risikobereich des Struktur- oder Karosserieteils sichergestellt.

Ferner kann das Struktur- oder Karosserieteil eine A-Säule, eine B-Säule, eine C-Säule, eine D-Säule, ein Schweller, ein Dachrahmen oder eine Seitenwand eines Kraftfahrzeugs sein. Die im Nassbereich der jeweiligen Bauteile liegenden Bereiche können die zinkhaltige Beschichtung aufweisen. Vorzugsweise kann eine Seitenwand einstückig gebildet und insbesondere partiell gehärtet sein.

Die oben aufgezeigte Aufgabe wird gemäß einer weiteren Lehre der vorliegenden Erfindung bei einem Verfahren zur Herstellung eines Struktur- oder Karosserieteils, insbesondere eines zuvor beschriebenen Struktur- oder Karosserieteils, aus einer Blechplatine, insbesondere einer zuvor beschriebenen Blechplatine, dadurch gelöst, dass auf ein erstes Blechplatinenteil zumindest teilweise eine zinkhaltige Beschichtung aufgebracht wird und das erste Blechplatinenteil mit einem zweiten Blechplatinenteil gefügt wird. Das Ergebnis ist eine anwendungsspezifisch gestaltete Blechplatine für ein Struktur- oder Karosserieteil. Demnach kann in einfacher Weise eine Blechplatine mit einem optimalen Korrosionsschutz auch in einem Risikobereich hergestellt werden.

Gemäß einer ersten erfindungsgemäßen Ausgestaltung des erfindungsgemäßen Verfahrens kann vor dem Fügen der zumindest zwei Blechplatinenteile das erste Blechplatinenteil zugeschnitten werden und/oder das zweite Blechplatinenteil zugeschnitten werden. Dies kann den Aufwand für nachfolgende Fertigungsschritte verringern.

Prinzipiell können verschiedene Verfahren zur Aufbringung einer zinkhaltigen Beschichtung eingesetzt werden. Für organische Beschichtungen hat sich jedoch eine Aufbringung der zinkhaltigen Beschichtung durch Coil-Coating bewährt, während bevorzugt bei anorganischen Verfahren das Aufbringen mittels Feuerverzinken, Physikalische Gasphasenabscheidung (PVD), chemische Gasphasenabscheidung (CVD) oder elektrolytisch durchgeführt werden kann. Beispielsweise kann ein Stahlband im Durchlauf mit der zinkhaltigen Beschichtung versehen werden und anschließend auf ein gewünschtes Maß abgelängt werden. Hierdurch kann eine kontinuierliche Fertigung ermöglicht werden.

Die gefügten Blechplatinenteile können gemäß einer weiteren Ausführungsform einer Warmumformung unterzogen werden. Ein erster Bereich der gefügten Blechplatinenteile und mindestens ein zweiter Bereich der der gefügten Blechplatinenteile können während der Warmumformung unterschiedlich temperiert werden. Beispielsweise können bei einem Warmumformwerkzeug lokal temperierte Zonen eingestellt werden. Es lassen sich unterschiedliche Gefügestrukturen in der Blechplatine herstellen, um unterschiedlichen Materialgüten zu erzielen.

Gemäß einer weiteren erfindungsgemäßen Ausgestaltung des erfindungsgemäßen Verfahrens wird das zinkbeschichtete Blechplatinenteil nicht pressgehärtet. Mit anderen Worten wird nur das Blechplatinenteil, welches beispielsweise mit einer Aluminium-Silizium-Beschichtung versehen ist, pressgehärtet. Hierdurch kann einerseits eine evtl. auftretende Verzundung des mit der zinkhaltigen Beschichtung versehenen Blechplatinenteils oder ein Aufplatzen der Beschichtung vermieden werden. Andererseits können in einfacher Weise unterschiedliche Gefügestrukturen in der Blechplatine hergestellt werden, um unterschiedlichen Materialgüten zu erzielen.

Alternativ kann zur Vermeidung einer Verzundung des mit der zinkhaltigen Beschichtung versehenen Blechplatinenteils vorgesehen sein, dieses Blechplatinenteil zusätzlich mit einer Aluminium-Silizium-Beschichtung versehen werden. Gemäß einer erfindungsgemäßen Ausgestaltung kann auf das erste Blechplatinenteil zunächst eine Aluminium-Silizium-Beschichtung und dann eine zinkhaltige Beschichtung zumindest teilweise aufgebracht werden.

Die Besäumung der gefügten Blechplatinenteile kann vor der Warmumformung, während der Warmumformung oder nach der Warmumformung durchgeführt werden. Grundsätzlich kann die Besäumung durch unterschiedliche Verfahren und/oder zu unterschiedlichen Verfahrenszeitpunkten erfolgen. Vorteilhafterweise kann ein Kaltbeschnitt durchgeführt werden, wenn die Besäumung vor der Warmumformung erfolgt. Zur Durchführung der Besäumung während der Warmumformung kann das Warmumformwerkzeug geeignete Schneideinrichtungen umfassen. Nach der Warmumformung kann zur Besäumung bevorzugt eine Lasereinrichtung eingesetzt werden.

Es gibt nun eine Vielzahl von Möglichkeiten, die Blechplatine, das Struktur- oder Karosserieteil und das Verfahren zur Herstellung der Blechplatine auszugestalten und weiterzubilden. Hierzu wird einerseits verwiesen auf die den Patentansprüchen 1, 6 und 9 nachgeordneten Patentansprüche und andererseits auf die Beschreibung von

Ausführungsbeispielen in Verbindung mit der Zeichnung. In der Zeichnung zeigt
- Fig. 1a: eine schematische Ansicht eines ersten Ausführungsbeispiels einer Blechplatine gemäß der vorliegenden Erfindung vor der Umformung,
- Fig. 1b: eine schematische Ansicht des ersten Ausführungsbeispiels einer Blechplatine gemäß der vorliegenden Erfindung nach der Umformung,
- Fig. 2a: eine schematische Ansicht eines ersten Ausführungsbeispiels eines Strukturteils eines Kraftfahrzeugs gemäß der vorliegenden Erfindung vor der Umformung,
- Fig. 2b: eine schematische Ansicht des ersten Ausführungsbeispiels eines Strukturteils eines Kraftfahrzeugs gemäß der vorliegenden Erfindung nach der Umformung, und
- Fig. 3: eine schematische Ansicht eines dritten Ausführungsbeispiels einer Blechplatine gemäß der vorliegenden Erfindung.

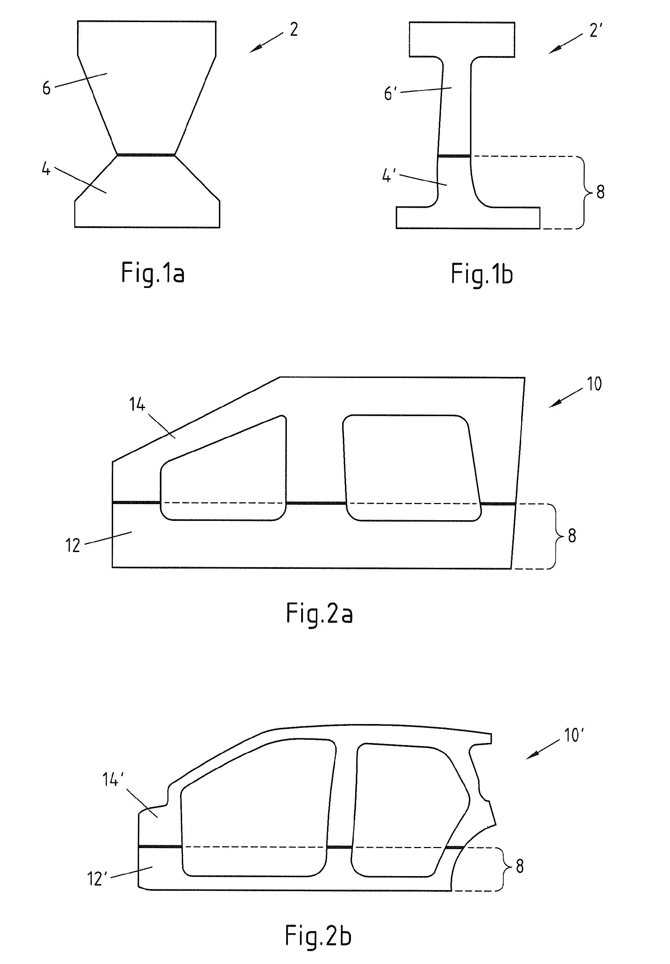

Figur 1 zeigt zunächst ein Ausführungsbeispiel einer erfindungsgemäßen Blechplatine 2 in Form eines Tailored Blanks. Das Tailored Blank 2 besteht aus mindestens zwei unterschiedlichen Blechplatinenteilen 4 und 6 aus unterschiedlichen Materialgüten und/oder Materialdicken zur Erzielung spezifischer an die Belastung angepasster Eigenschaften bei minimalem Gewicht. Die Blechplatinenteile 4 und 6 sind miteinander verschweißt.

Um einen optimierten Korrosionsschutz zumindest im Bereich des ersten Blechplatinenteils 4 zu erreichen, ist das erste Blechplatinenteil 4 mit einer zinkhaltigen Beschichtung versehen. Vorzugsweise weist die zinkhaltige Beschichtung vor einer Warmumformung einen Zinkanteil von mindestens 30 Gew.-% auf. Während einer Warmumformung diffundiert Zink in den Stahlwerkstoff, so dass sich der Zinkgehalt der Beschichtung verringert. Bei einem Mindestzinkgehalt von 30 Gew.-% in der Beschichtung wird aber sichergestellt, dass eine ausreichende Menge Zink zur Bereitstellung eines sehr guten Korrosionsschutzes auch nach einem Warmumformen vorhanden ist. Beispielsweise ist das Blechplatinenteil 4 feuerverzinkt.

Gemäß anderen Varianten der vorliegenden Erfindung ist es möglich, dass das Blechplatinenteil 4 zusätzlich eine Aluminium-Silizium-Beschichtung aufweist, die bevorzugt vor der zinkhaltigen Beschichtung aufgebracht worden ist.

Das zweite Blechplatinenteil 6 ist im vorliegenden Ausführungsbeispiel aus Kostengründen unbeschichtet. Es versteht sich jedoch, dass das zweite Blechplatinenteil 6 auch eine zinkhaltige Beschichtung und/oder eine Aluminium-Silizium-Beschichtung aufweisen kann.

Figur 1b zeigt das hergestellte Struktur- oder Karosserieteil 2' nach der Warmumformung im gewünschten endgültigen Zustand. Im vorliegenden Ausführungsbeispiel handelt es sich um eine vereinfacht dargestellte B-Säule. Mit dem Bezugszeichen 8 wird ein Nassbereich bezeichnet, also ein Bereich mit erhöhtem Korrosionsrisiko. Durch die zinkhaltige Beschichtung des Blechplatinenteils 4' ist ein ausreichender Korrosionsschutz auch in dem Nassbereich 8 sichergestellt. Gleichzeitig kann aber auch durch die Werkstoffauswahl des Blechplatinenteils 4' auf das Crashverhalten der B-Säule Einfluss genommen werden.

Nachfolgend soll beispielhaft anhand der Figuren 1a und 1b die Herstellung des Struktur- oder Karosserieteils 2' aus der Blechplatine 2 erläutert werden.

In einem ersten Schritt kann ein Stahlband im Durchlauf mit der zinkhaltigen Beschichtung versehen werden. Grundsätzlich sind verschiedene Aufbringungsverfahren möglich, die von der Art der zinkhaltigen Beschichtung abhängen können. Beispielsweise hat es sich bei einer organischen Beschichtung als vorteilhaft gezeigt, das Coil-Coating Verfahren zu verwenden, während bei anorganischen Beschichtungen bevorzugt eine Feuerverzinkung, eine elektrolytische Aufbringung oder ein PVD-/CVD-Verfahren eingesetzt werden kann.

Nach der Aufbringung der zinkhaltigen Beschichtung kann das Bauteil spezifisch abgelängt und zugeschnitten werden, so dass beispielsweise das erste Blechplatinenteil 4 hergestellt wird.

Parallel kann zumindest ein weiteres Blechplatinenteil 6 in ähnlicher Weise hergestellt werden, wobei aus Kostengründen auf den Beschichtungsschritt verzichtet wird oder eine für die Warmumformung geeignete Beschichtung, beispielsweise eine Aluminium-Silizium-Beschichtung, aufgebracht wird. Die spezifisch abgelängten und zugeschnittenen Blechplatinenteile 4 und 6 können dann zu einem Tailored Blank 2 durch geeignete Mittel gefügt werden. Es versteht sich, dass die Blechplatinenteile 4 und 6 auch erst gefügt und dann eine zinkhaltige Beschichtung aufgebracht werden kann.

Die Blechplatine 2 kann dann warmumgeformt werden, wobei die Warmumformung bevorzugt unter Schutzgas durchgeführt werden kann. Das warmumgeformte Struktur- oder Karosserieteil 2' kann unterschiedliche Gefügestrukturen aufweisen, die beispielsweise durch lokal temperierte Zonen im Warmumformwerkzeug erzeugt werden können. Beispielsweise kann nur das Blechplatinenteil 6 pressgehärtet werden, sofern dieses aus einem härtbaren Werkstoff besteht.

Die endgültige Besäumung kann schon vor der Warmumformung, aber auch erst während oder nach der Warmumformung erfolgen. Beispielsweise kann vor der Warmumformung vorzugsweise ein Kaltbeschnitt durchgeführt werden. Während der Warmumformung kann der Zuschnitt mittels geeigneter Schneidvorrichtungen im Warmumformwerkzeug durchgeführt werden. Für den Fall, dass erst nach der Warmumformung die Blechplatine 2 besäumt wird, kann bevorzugt ein Laserbeschnitt erfolgen.

In den Figuren 2a und 2b ist ein zweites Ausführungsbeispiel einer Blechplatine 10 eines Kraftfahrzeugs gemäß der vorliegenden Erfindung gezeigt. Ein erstes Blechplatinenteil 12, welches im Nassbereich 8 liegt, ist wiederum mit einer zinkhaltigen Beschichtung versehen, während das zweite Blechplatinenteil 14 im vorliegenden Fall eine Aluminium-Silizium-Beschichtung aufweist. Auch in diesem Fall kann das zweite Blechplatinenteil 14 andere Beschichtungen oder auch keine Beschichtung aufweisen.

Bei der vorliegenden Seitenwand 10' eines Kraftfahrzeugs ist zu erkennen, dass der korrosionsanfällige Bereich 8 auch in diesem Fall vollständig mit einer zinkhaltigen Beschichtung versehen ist, so dass ein ausreichender Korrosionsschutz gewährleistet werden kann. Hierbei weist die Fahrzeugseitenwand 10' einen im unteren Bereich verlaufenden Schweller, einen Dachrahmenbereich und sich zwischen dem Schweller und dem Dachrahmenbereich befindliche Fahrzeugsäulen auf.

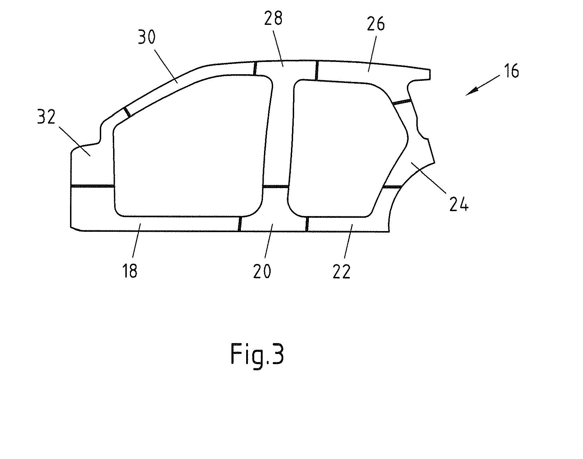

In der Figur 3 ist ein weiteres Ausführungsbeispiel gezeigt. Die beispielhaft dargestellte und einstückig gebildete Seitenwand 16 eines Kraftfahrzeugs nach der Warmumformung und endgültigen Besäumung weist eine Vielzahl an Blechplatinenteile 18 bis 32 bzw. unterschiedliche Bereiche 18 bis 32 auf.

Die unterschiedlichen Blechplatinenteile 18 bis 32 können aus unterschiedlichen Stählen bzw. Stahllegierungen bestehen, ohne oder mit unterschiedlichen Beschichtungen versehen sein und gegebenenfalls tailored tempered sein. Verschiedene Bereiche eines Blechs oder Tailored Blanks können also lokal unterschiedlich temperiert werden, um unterschiedliche Gefüge auszubilden. Beispielsweise weist ein pressgehärteter Bereich ein überwiegend martensitisches Gefüge und ein nicht pressgehärteter Bereich ein perlitisches/ferritisches Gefüge, bainitisches/perlitisches/ferritisches Gefüge oder ein perlitisches/bainitisches Gefüge auf. Darüber hinaus versteht es sich, dass die unterschiedlichen Blechplatinenteile 18 bis 32 unterschiedliche Dicken und Formen aufweisen können.

Die Blechplatinenteile 18, 20 und 22 können zumindest teilweise einen Schweller bilden, während die Blechplatinenteile 26, 28 und 30 zumindest teilweise einen Dachrahmen bilden können. Darüber hinaus können die Blechplatinenteile 18, 30 und 32 zumindest teilweise eine A-Säule, die Blechplatinenteile 20 und 28 zumindest teilweise eine B-Säule und die Blechplatinenteile 22, 24 und 26 zumindest teilweise eine C-Säule bilden.

Nachfolgend wird exemplarisch eine bevorzugte Ausführungsform der Seitenwand 16 erläutert.

Die Blechplatinenteile 18 und 22, die in einem besonders korrosionsanfälligen Bereich liegen, können aus einem Mangan-Bor-Stahl mit einer zinkhaltigen Beschichtungen bestehen. Darüber hinaus können die Blechplatinenteile 18 und 22 tailored tempered sein. Nach der Warmumformung kann dieser Stahl in Abhängigkeit vom Lastfall mittels unterschiedlich temperierter Zonen im Umformwerkzeug ein ferritisch-perlitisches, ferritisch-bainitisches, ferritisch-perlitischbainitisches oder bainitisches Gefüge aufweisen. Vor allem können die Blechplatineteile 18 und 22 aber auch ein überwiegend martensitisches Gefüge aufweisen. Ein martensitisches Gefüge stellt eine maximale Festigkeit jedoch bei verringerter Bruchdehnung zur Verfügung. Ein ferritisch-perlitisches, ferritisch-bainitisches, ferritisch-perlitischbainitisches oder bainitisches Gefüge weisen geringere bis mittelhohe Festigkeiten bei umgekehrten Bruchdehnungswerten auf.

Ferner können die Blechplatinenteile 20, 24, 26 und 32 aus einem mikrolegiertem Stahl bestehen. Beispielsweise besteht die Stahllegierung aus folgenden Legierungsbestandteilen in Gew.-%:

| | | | | |
|---|---|---|---|---|
| 0,01 % | ≤ | C | ≤ | 0,11 %, |
| | | Si | ≤ | 0,5 %, |
| 0,2 % | ≤ | Mn | ≤ | 1 %, |
| | | Ti | ≤ | 0,15 %, |
| 0,015 % | ≤ | Al | ≤ | 2,0 %, |
| | | S | ≤ | 0,025 %, |
| | | P | ≤ | 0,03 %, |
| | | Nb | ≤ | 0,09 %, |

Rest Eisen sowie unvermeidbare Verunreinigungen. Die Blechplatinenteile 24, 26 und 32 können mit einer Aluminium-Silizium-Beschichtung versehen sein, um einer Verzunderung während der Warmumformung entgegenzuwirken. Nach der Warmumformung kann sich durch Verwendung temperierter Zonen im Umformwerkzeug lokal ein überwiegend ferritisch-bainitisches oder ferritisch-perlitisches Gefüge ergeben.

Das Blechplatinenteil 20 weist vorzugsweise eine zinkhaltige Beschichtung auf, da es im Nassbereich der Fahrzeugkarosserie angeordnet ist.

Des Weiteren kann das Blechplatinenteil 28 aus einem Mangan-Bor-Stahl bestehen, der eine Aluminium-Silizium-Beschichtung aufweist. Ein typischer Mangan-Bor-Stahl kann vorzugsweise folgende Legierungsbestandteile in Gew.-% aufweisen:

| | | |
|---|---|---|
| C | = | 0,36 %, |
| S | = | 0,21 %, |
| Mn | = | 1,21 %, |
| Ti | = | 0,035 %, |
| B | = | 0,0021 %, |
| Cr | = | 0,21 %, |
| N | = | 0,01 %, |
| Al | = | 0,029 %, |
| S | = | 0,001 %, |
| Cu | = | 0,018 %, |

Rest Eisen sowie unvermeidbare Verunreinigungen.

Nach der Warmumformung des Blechplatinenteils 28 und einer Presshärtung stellt sich ein überwiegend martensitisches Gefüge ein.

Das Blechplatinenteil 30 kann aus einem Restaustenit-Stahl bestehend aus folgenden Legierungsbestandteilen in Gew.-%

| | | | | |
|---|---|---|---|---|
| 0,01 % | ≤ | C | ≤ | 0,24 %, |
| | | Si | ≤ | 0,3 %, |
| 0,2 % | ≤ | Mn | ≤ | 2 %, |
| | | Ti | ≤ | 0,2 %, |
| 0,015 % | ≤ | Al | ≤ | 1,6 %, |
| | | S | ≤ | 0,01 %, |

| | | |
|---|---|---|
| P | ≤ | 0, 04 %, |
| Nb | ≤ | 0, 2 %, |
| Mo | ≤ | 0,6 %, |
| B | ≤ | 0,005 %, |
| Cr | ≤ | 0,6 %, |

Rest Eisen sowie unvermeidbare Verunreinigungen, hergestellt sein. Auch diese Stahllegierung ist härtbar und stellt hohe Festigkeitssteigerungen bereit. Das Blechplatinenteil 30 weist vorzugsweise eine zinkhaltige Beschichtung auf.

Insgesamt erhält man eine anwendungsspezifisch gestaltete Seitenwand 16. Insbesondere weist eine solche Seitenwand 16 aufgrund der unterschiedlichen Materialgüten ein optimiertes Struktur- und Crashverhalten auf.

## Patentansprüche

1. Blechplatine (2, 10), insbesondere ein Tailored Blank, für ein Kraftfahrzeug mit einem ersten Blechplatinenteil (4, 12) und mit mindestens einem zweiten Blechplatinenteil (6, 14),
**dadurch gekennzeichnet, dass** das erste Blechplatinenteil (4, 12) zumindest teilweise eine zinkhaltige Beschichtung aufweist.

2. Blechplatine (2, 10) nach Anspruch 1,
**dadurch gekennzeichnet, dass** die zinkhaltige Beschichtung einen Zinkanteil von mindestens 30 Gew.-% umfasst.

3. Blechplatine (2, 10) nach einem der vorherigen Ansprüche 1 oder 2,
**dadurch gekennzeichnet, dass** die zinkhaltige Beschichtung eine organische Beschichtung oder eine anorganische Beschichtung ist.

4. Blechplatine (2, 10) nach einem der vorherigen Ansprüche 1 bis 3,
**dadurch gekennzeichnet, dass** das zweite Blechplatinenteil (6, 14) der mindestens zwei Blechplatinenteile (4, 6, 12, 14, 18, 20, 22, 24, 26, 28, 30, 32) unbeschichtet ist oder eine Aluminium-Silizium-Beschichtung aufweist.

5. Blechplatine (2, 10) nach einem der vorherigen Ansprüche 1 bis 4,
**dadurch gekennzeichnet, dass** mindestens eines der Blechplatinenteile (4, 6, 12, 14, 18, 20, 22, 24, 26, 28, 30, 32) aus einer Stahlegierung mit folgenden Legierungsbestandteile in Gew.-% besteht:
| | | | | |
|---|---|---|---|---|
| 0,01 % | ≤ | C | ≤ | 0,5 %, |
| | | Si | ≤ | 0,8 %, |
| 0,2 % | ≤ | Mn | ≤ | 2 %, |
| | | Cr | ≤ | 0,8 %, |
| | | Mo | ≤ | 0,02 %, |
| | | Ti | ≤ | 0,2 %, |
| | | B | ≤ | 0,05 %, |
| 0,015 % | ≤ | Al | ≤ | 2,0 %, |
| | | S | ≤ | 0,03 %, |
| | | P | ≤ | 0, 04 %, |
| | | V | ≤ | 0,01 %, |
| | | Nb | ≤ | 0,1 %, |
| | | Cu | ≤ | 0,1 %, |
| | | Ni | ≤ | 0,1 %, |
Rest Eisen sowie unvermeidbare Verunreinigungen.

6. Struktur- oder Karosserieteil (2', 10', 16) hergestellt aus einer Blechplatine (2, 10) gemäß einem der Ansprüche 1 bis 5.

7. Struktur- oder Karosserieteil (2', 10', 16) nach Anspruch 6,
**dadurch gekennzeichnet, dass** das zumindest teilweise eine zinkhaltige Beschichtung aufweisende Blechplatinenteil (4', 12') im Nassbereich (8) des Kraftfahrzeugs angeordnet ist.

8. Struktur- oder Karosserieteil (2', 10', 16) nach einem der vorherigen Ansprüche 6 oder 7,
**dadurch gekennzeichnet, dass** das Struktur- oder Karosserieteil eine A-Säule, eine B-Säule, eine C-Säule, eine D-Säule, ein Schweller, ein Dachrahmen oder eine Seitenwand eines Kraftfahrzeugs ist.

9. Verfahren zur Herstellung eines Struktur- oder Karosserieteils, insbesondere eines Struktur- oder Karosserieteils (2', 10', 16) nach einem der Ansprüche 6 bis 8, aus einer Blechplatine, insbesondere einer Blechplatine (2, 10) nach einem der Ansprüche 1 bis 5, **dadurch gekennzeichnet, dass** auf ein erstes Blechplatinenteil (4, 12) eine zinkhaltige Beschichtung zumindest teilweise aufgebracht wird, und das erste Blechplatinenteil (4, 12) mit einem zweiten Blechplatinenteil (6, 14) gefügt wird.

10. Verfahren nach Anspruch 9,
**dadurch gekennzeichnet, dass** vor dem Fügen der zumindest zwei Blechplatinenteile (4, 6, 12, 14, 18, 20, 22, 24, 26, 28, 30, 32) das erste Blechplatinenteil (4, 12) zugeschnitten wird und/oder das zweite Blechplatinenteil (6, 14) zugeschnitten wird.

11. Verfahren nach einem der vorherigen Ansprüche 9 oder 10, **dadurch gekennzeichnet, dass** die zinkhaltige Beschichtung durch Coil-Coating, Feuerverzinken, Physikalische Gasphasenabscheidung, chemische Gasphasenabscheidung oder elektrolytische Aufbringung aufgebracht wird.

12. Verfahren nach einem der vorherigen Ansprüche 9 bis 11, **dadurch gekennzeichnet, dass** die gefügten Blechplatinenteile (4, 6, 12, 14) warmumgeformt werden, wobei ein erster Bereich der gefügten Blechplatinenteile (4, 6, 12, 14) und mindestens ein zweiter Bereich der gefügten Blechplatinenteile (4, 6, 12, 14) unterschiedlich temperiert werden.

13. Verfahren nach Anspruch 12,
**dadurch gekennzeichnet, dass** das zinkbeschichtete Blechplatinenteil (4, 4', 12, 12', 18, 20, 22) nicht pressgehärtet wird.

14. Verfahren nach einem der vorherigen Ansprüche 9 bis 12 **dadurch gekennzeichnet, dass** auf das erste Blechplatinenteil (4, 12) zunächst eine Aluminium-Silizium-Beschichtung und dann eine zinkhaltige Beschichtung zumindest teilweise aufgebracht wird.

15. Verfahren nach Anspruch 12,
**dadurch gekennzeichnet, dass** die Besäumung der gefügten Blechplatinenteile (4, 6, 12, 14, 18, 20, 22, 24, 26, 28, 30, 32) vor der Warmumformung, während der Warmumformung oder nach der Warmumformung durchgeführt wird.
